Europäisches Patentamt

European Patent Office

Office européen des brevets

(19)

(11) Publication number: **0 111 041**
**A1**

(12) **EUROPEAN PATENT APPLICATION**

(21) Application number: **82850258.3**

(22) Date of filing: **13.12.82**

(51) Int. Cl.³: **C 08 L 95/00**

(43) Date of publication of application:
**20.06.84 Bulletin 84/25**

(84) Designated Contracting States:
**AT BE CH DE FR GB IT LI LU NL SE**

(71) Applicant: **AB SKANSKA CEMENTGJUTERIET**
**Nordenskiöldsgatan 4**
**S-211 02 Malmö(SE)**

(72) Inventor: **Tyllgren, Anders Per Erik**
**Södertorpsvägen 116**
**S-214 65 Malmö(SE)**

(74) Representative: **Wallin, Bo-Göran et al,**
**AWAPATENT AB Box 5117**
**S-200 71 Malmö(SE)**

(54) **Method of producing asphalt concrete.**

(57) Asphalt concrete is formed by mixing mineral aggregate
and asphalt emulsion and is then treated with an emulsion
breaking liquid for breaking the asphalt emulsion and
precipitating the asphalt onto to mineral aggregate. A basic
solution, preferably an aqueous solution of calcium hydrox-
ide, is used as emulsion breaking liquid for cationic asphalt
emulsions. The emulsion breaking liquid can be distributed
over the laid asphalt concrete.

EP 0 111 041 A1

1

## METHOD OF PRODUCING ASPHALT CONCRETE

Asphalt concrete can be produced in several different ways. One way is to mix asphalt which has been heated to a liquid state with mineral aggregate and then laying the mix and allowing it to cool. Another traditional way is to dissolve the asphalt in a solvent before it is mixed with the mineral aggregate, stabilization taking place by evaporation of the solvent. Recently, one has instead made the asphalt low-viscous (easy flowing) by emulsifying it in water so as to obtain an emulsion of the oil-in-water type. This asphalt emulsion can be spread over an aggregate or mixed into it to form asphalt concrete. It is generally considered that the use of emulsions is superior to the use of heat and solvent for reasons of production technique, work hygiene, economy and also ecology.

However, asphalt emulsions suffer from an inherent technical weakness, namely the difficulty of controlling the deposition of asphalt on the particles of the aggregate. Heated asphalt stiffens by cooling, and solutions of asphalt stiffen by evaporation of the solvent. The asphalt emulsions give off their asphalt in that the emulsions are broken upon contact with the particles of the aggregate. The breakage of the emulsion implies that the suspended asphalt particles contained in the emulsion unite and reconstitute the original continuous asphalt phase at the same time as emulsion water is released. In prior art methods for forming asphalt emulsion concrete, the breakage of the emulsion has been controlled by a series of more or less controllable circumstances, and great losses of asphalt material have arisen at slow breakage; alternatively, a stiff and difficult-to-handle mix with poor homogeneity has been achieved when the breakage takes place too rapidly.

The commonest types of asphalt emulsions are cationic (others are anionic or non-ionic), and this implies that the cationic asphalt particles are repelled by the positive charges of the particle surfaces. The breakage of the emulsion is initiated by various "disturbances". Of these the most important is that the emulsion when being admixed with the aggregate is brought into contact with a mineral aggregate containing silicates.

As already mentioned, great losses of asphalt materials have arisen in the application of prior art methods for producing asphalt emulsion concrete. The reason for this would seem to be that the complete breakage of the asphalt emulsion does not necessarily take place immediately (and should not either take place immediately because the mix will then become stiff and difficult to handle). In extreme cases, the breakage of the emulsion may take several weeks when using prior art methods. Normally, 50-90% of the asphalt emulsion (estimated figures) break during the mixing of the asphalt emulsion and the mineral aggregate and during subsequent handling (storage, transport, laying, rolling).

The losses suffered in the use of prior art methods would seem to occur because the remaining unbroken asphalt emulsion flows out of the paving and ends up at the side of the road. This is particularly apparent if the mineral aggregate has a low silicate content, is poor in fines and wet or if the newly produced paving mix is exposed to rain immediately after laying. The result is that the environment is dirtied and that the production work is rendered more difficult. However, the most serious consequence of this deficient breakage of the emulsion is that the asphalt concrete loses a vital amount of binder which is actually necessary in order that the resulting paving should be able to withstand traffic stresses.

Controlling so-called open asphalt emulsion concrete produced during earlier years, one has found that losses of between 25% and 50% of the added amount of asphalt have sometimes occurred, which in and per se has caused comprehensive damage to certain pavings, particularly in wearing course layers.

The object of this invention is to overcome the disadvantages inherent in the prior art methods of producing asphalt concrete by mixing mineral aggregate and asphalt emulsions. The invention is based on the understanding that the asphalt emulsion has to be broken after the complete mixing of mineral aggregate and asphalt emulsion, and according to the invention the asphalt concrete is therefore treated with an emulsion breaking liquid after the mineral aggregate and the asphalt emulsion have been mixed. As emulsion breaking liquid, use is preferably made of a basic solution, particularly an aqueous solution of calcium hydroxide if the asphalt emulsion is cationic. With anionic or non-ionic asphalt emulsions, use is made of suitable emulsion breaking liquids for these emulsions. However, the most customary asphalt emulsions are cationic, and then the basic solutions are suitable. Other technically useful asphalt emulsion breaking liquids are solutions of sodium hydroxide or calcium oxide, but these solutions are both more expensive and less suitable in respect of work hygiene than is the cheaper calcium hydroxide. Besides, the calcium hydroxide or slaked lime has the advantage of being readily available and more suitable in respect of work hygiene and ecology. Moreover, it does not adversely affect the asphalt concrete.

The invention thus differs from prior art methods of producing asphalt emulsion concrete, e.g. the method in which cement powder has been admixed with the mineral aggregate before the addition of the asphalt emulsion. Such cement powder has primarily been supplied to absorb water from the mixture and stabilize the material. Here, the cement powder principally is part of the mineral aggregate in the asphalt concrete. According to

4

the invention, the emulsion breaking liquid should however be added after the mixing or during the last stages thereof since one must first ensure a thorough mixing in order that the mineral aggregate should be well covered with asphalt when the emulsion is broken.

Without being bound to any underlying specific theory, it would seem as if the reason for the slow breakage of the asphalt emulsion in prior art methods is that the negatively charged particle surfaces of the aggregate are gradually isolated beneath films of asphalt and that the released emulsion water together with the aqueous phase in still unbroken emulsion is enriched with positive ions which further obstruct the agglomeration of the remaining suspended asphalt. Under any circumstances, the remaining unbroken emulsion is diluted with released emulsion water, whereby the viscosity of the emulsion successively decreases and the emulsion, to an ever increasing extent, will tend to flow out of the asphalt concrete mix or the paving when prior art methods are utilized.

With the present invention, this disadvantage is overcome in that the emulsion breaking liquid is admixed with the newly produced finished mix or sprayed over said mix after it has been laid on the intended location, whereby the repelling action of the remaining ions is abolished. As soon as this has taken place, the asphalt particles still in suspension can spontaneously and instantaneously unite to form a film on the particles of the aggregate.

As already mentioned, the commonest asphalt emulsions are cationic, and then preference is given to a calcium hydroxide solution. Use is preferably made of a saturated solution. Calcium hydroxide has a solubility of 1.8 kg per 1000 litres of water, which gives a pH of over 11. Such a solution is readily prepared and distributed in the newly produced asphalt concrete or over the laid asphalt concrete. The distribution can thus take place in the asphalt works after the mix

5

mix is finished or also be carried out as a separate step immediately after the laying device and also during the subsequent treatment of the surface (e.g. in connection with rolling).

Making small-scale experiments, one has established that relatively small amounts of "milk of lime" are required, and it seems as if amounts of 0.5 - 3, for instance between 0.5 and 1 litre/$m^2$ would be suitable. The suitable amount however depends however on many factors, such as the composition of the mineral aggregate, the amount of asphalt concrete per surface unit etc. To establish the amount of emulsion breaking liquid suitable for a certain purpose is however simple and can be realized by simple experiments.

6

CLAIMS

1. A method of producing asphalt concrete by mixing mineral aggregate and asphalt in the form of an asphalt emulsion, c h a r a c t e r i s e d by treating the mixture of mineral aggregate and asphalt emulsion with an emulsion breaking liquid for breaking the asphalt emulsion and precipitating the asphalt onto the mineral aggregate.

2. Method as claimed in claim 1, c h a r a c - t e r i s e d by carrying out the treatment with the emulsion breaking liquid after the asphalt concrete has been mixed or placed in position.

3. Method as claimed in claim 1 or 2, c h a r a c - t e r i s e d by carrying out the treatment with a basic emulsion breaking liquid.

4. Method as claimed in claim 3, c h a r a c - t e r i s e d in that the treatment is carried out with an aqueous solution of sodium hydroxide or calcium oxide or preferably calcium hydroxide.

5. Method as claimed in claim 4, c h a r a c - t e r i s e d by carrying out the treatment with a substantially saturated solution of calcium hydroxide.

6. Method as claimed in any of claims 1-5, c h a - r a c t e r i s e d by forming the asphalt concrete from mineral aggregate of such a particle size distribution that the asphalt concrete will be porous so as to permit the emulsion breaking liquid to pass.

0111041

<table>
<tr><th colspan="3">European Patent Office</th><th>EUROPEAN SEARCH REPORT</th><th>Application number</th></tr>
<tr><td colspan="3"></td><td></td><td>EP 82 85 0258</td></tr>
</table>

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X,Y | FR-A-2 129 168 (TRAVEAUX ET PRODUITS ROUTIERS) <br> * Claims 1-4 * | 1-6 | C 08 L 95/00 |
| A | FR-A-2 387 195 (MUNTZER & MUNTZER) <br> * Claims 1-3 * | 1-6 | |
| Y | EP-A-0 022 624 (THE BRITISH PETROLEUM COMPANY) <br> * Claims 1,13 * | 1-6 | |

| TECHNICAL FIELDS SEARCHED (Int. Cl. ³) |
|---|
| C 04 B <br> C 08 L <br> E 01 C |

The present search report has been drawn up for all claims

| Place of search | Date of completion of the search | Examiner |
|---|---|---|
| THE HAGUE | 22-07-1983 | STANGE R.L.H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82